# FASCICULE DE BREVET EUROPEEN

(11) **EP 1 873 445 B1**
(45) Date de publication et mention de la délivrance du brevet: **19.11.2014**
(21) Numéro de dépôt: 07110387.3
(22) Date de dépôt: 15.06.2007
(51) Int. Cl.: F21V 17/00, B60Q 1/068

(54) **Projecteur muni d'un réflecteur pivotant comportant un écrou de réglage de la position angulaire du réflecteur**
Scheinwerfer, der mit einem schwenkbaren Reflektor ausgestattet ist, der eine Mutter zum Einstellen der Neigungsposition des Reflektors umfasst
Headlight equipped with a pivoting reflector comprising a nut for adjusting the angular position of the reflector

(30) Priorité: 23.06.2006 FR 0605675
(43) Date de publication de la demande: 02.01.2008
(73) Titulaire: VALEO VISION, 93012 Bobigny Cedex (FR)
(72) Inventeur: Maliar, Rémi, 59880 Saint Saulve (FR); Herbin, Cyril, 59530 Potelle (FR)
(74) Mandataire: Schaffner, Jean

(56) Documents cités:
- EP-A- 1 452 798
- EP-A- 1 561 639
- DE-A1- 4 228 891
- DE-A1- 19 546 271
- US-A1- 5 111 341
- US-A1- 2004 008 520
- US-B1- 6 478 457

## Description

L'invention concerne un projecteur de véhicule automobile qui comporte un réflecteur pivotant et des moyens de réglage de la position angulaire du projecteur autour de son axe de pivotement.

L'invention concerne plus particulièrement un projecteur de véhicule automobile qui est susceptible d'émettre un faisceau selon un axe optique globalement longitudinal et qui comporte :
- un réflecteur qui est monté pivotant dans un boîtier autour d'un axe de pivotement transversal dans une plage de positions angulaires de réglage limitée par des butées angulaires extrêmes,
- des moyens de réglage de la position angulaire du réflecteur autour de son axe de pivotement qui comportent une vis de réglage qui est monté à rotation dans le boîtier autour de son axe perpendiculairement à l'axe de pivotement du réflecteur de manière à commander le pivotement du réflecteur.

On connaît déjà des projecteurs équipés de moyens de réglage comportant une vis de réglage. Dans ce type de projecteur, la vis de réglage est associée à un secteur denté ou fileté qui est fixé sur le réflecteur de manière à être centré sur l'axe transversal de pivotement du réflecteur. Le mouvement de rotation de la vis est ainsi transmis au réflecteur par une liaison cinématique du type "vis sans fin" par l'intermédiaire du secteur denté.

Après le réglage de la position angulaire du réflecteur, le réflecteur est maintenu dans sa position angulaire réglée par la vis sans fin.

Pour que cet agencement fonctionne correctement, il est préférable que la vis soit agencée précisément dans le boîtier par rapport au secteur denté afin que le tronçon fileté de la vis soit en prise sans jeu avec les dents du secteur denté. Pour remplir cette condition, les paliers de la vis de réglage doivent être positionnés très précisément dans le boîtier du projecteur par rapport à l'axe de pivotement du réflecteur.

Cependant, le boîtier est généralement réalisé en matériau plastique par moulage. Or, la fabrication par moulage ne permet pas de maîtriser suffisamment précisément le positionnement des paliers par rapport à l'axe de pivotement pour tous les boîtiers moulés dans un même moule.

De plus, au cours de son utilisation, le boîtier du projecteur est susceptible de se déformer sous l'effet de contraintes thermiques, notamment à cause de la chaleur dégagée par la source lumineuse du projecteur.

Ainsi, sur certains boîtiers de projecteur, l'engrènement de la vis avec le secteur denté est réalisé avec un jeu. Ce jeu a pour conséquence un réglage imprécis de la position angulaire du réflecteur.

En outre, le réflecteur mal maintenu dans une position angulaire fixe par la vis de réglage dans sa position angulaire est susceptible de trembler sensiblement autour de sa position angulaire au gré des vibrations du véhicule automobile.

Un autre inconvénient des moyens de réglage connus réside en ce qu'un opérateur maladroit ou incompétent risque, lorsqu'une butée angulaire est rencontrée sans qu'un réglage satisfaisant ait été trouvé, de forcer sur la vis de réglage en provoquant une déformation irréversible ou la rupture d'un des éléments de la chaîne cinématique, par exemple la butée angulaire, la vis de réglage ou le secteur denté.

Un projecteur selon le préanmbule de la revendication 1 est connu du document US 6 478 457.

Pour résoudre notamment ces problèmes, l'invention propose un projecteur de véhicule automobile selon les caractéristiques de la revendication 1.

Préférentiellement, l'angle déterminé de l'axe de la vis par rapport à l'axe de pivotement est de 90°, c'est-à-dire que la vis de réglage est montée à rotation dans le boîtier autour de son axe perpendiculairement à l'axe de pivotement du réflecteur.

Selon d'autres caractéristiques de l'invention :
- l'écrou est monté articulé par rapport au réflecteur autour d'un axe transversal d'articulation, l'axe d'articulation étant mobile par rapport au maneton du réflecteur de manière à transformer le mouvement rectiligne de l'écrou en mouvement de pivotement du réflecteur ;
- le projecteur comporte un bras dont l'axe a un angle déterminé par rapport à l'axe de pivotement du réflecteur, le bras ayant une première extrémité fixée au maneton, l'écrou étant monté coulissant axialement sur un tronçon d'extrémité libre du bras par l'intermédiaire d'un guide de coulissement ; préférentiellement, la vis de réglage est montée à rotation dans le boîtier autour de son axe perpendiculairement à l'axe de pivotement du réflecteur, et l'axe du bras est perpendiculaire à l'axe de pivotement du réflecteur ;
- l'écrou est monté articulé sur le guide de coulissement autour de l'axe transversal d'articulation ;
- le guide de coulissement est aussi monté articulé par rapport au bras autour de l'axe d'articulation ;
- le guide de coulissement comporte un orifice de guidage dans lequel le bras est engagé avec un jeu ;
- l'orifice de guidage est un trou traversant ;
- l'orifice de guidage comprend des bords verticaux limitant les déplacements transversaux du guide de coulissement sur le bras ;
- le bras étant centré dans l'orifice par des moyens de centrage élastiquement déformables ;
- le bras comporte une fourche dans laquelle l'écrou est monté pivotant par l'intermédiaire de tourillons d'axe transversal qui sont montés coulissants selon l'axe du bras dans des rainures axiales du bras ;
- le projecteur comporte une bielle dont une première extrémité est montée sur le maneton du réflecteur par une liaison du type pivot et dont une deuxième extrémité est montée articulée sur l'écrou ;

D'autres caractéristiques et avantages de l'invention apparaîtront au cours de la lecture de la description détaillée qui va suivre pour la compréhension de laquelle on se reportera aux dessins annexés parmi lesquels :
- la figure 1 est une vue en coupe longitudinale qui représente un projecteur de véhicule automobile comportant des moyens de réglage de la position angulaire du réflecteur réalisés selon les enseignements de l'invention ;
- la figure 2 est une vue en perspective éclatée du projecteur de la figure 1 qui représente le réflecteur, une vis de réglage et un écrou de réglage, ainsi qu'une lampe ;
- la figure 3 est une vue en perspective à plus grande échelle qui représente l'écrou de réglage de la figure 2 ;
- la figure 4 est une vue en perspective qui représente le réflecteur de la figure 2 sur lequel les moyens de réglage ont été assemblés ;
- la figure 5 est une vue en coupe longitudinale similaire à celle de la figure 1 qui représente le réflecteur dans une position angulaire extrême.

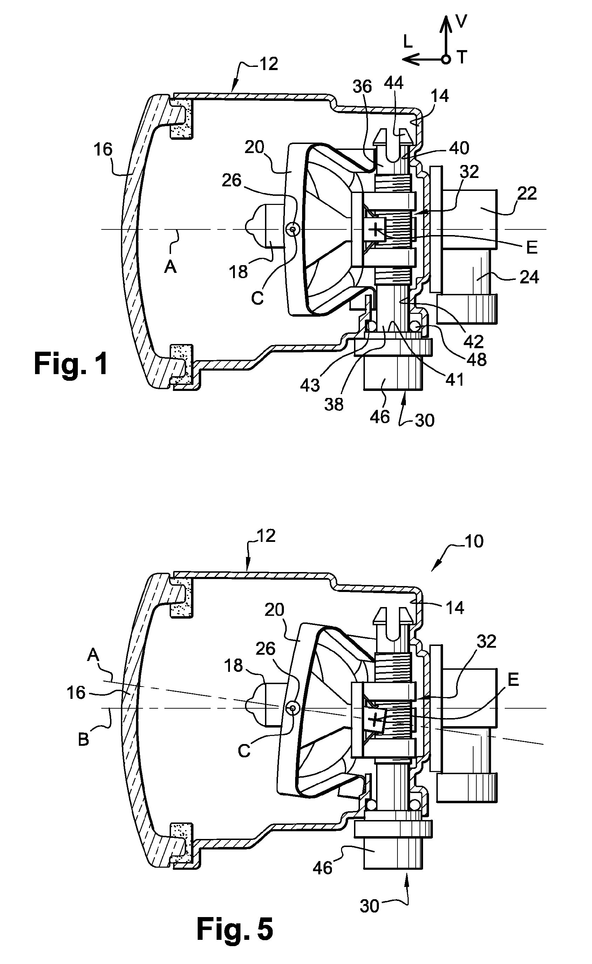

Pour la suite de la description, on adoptera à titre non limitatif une orientation longitudinale, verticale et transversale indiquée par le trièdre L,V,T de la figure 1.

Par la suite, des éléments identiques, analogues ou similaires seront désignés par des mêmes numéros de référence.

On a représenté à la figure 1 un projecteur 10 de véhicule automobile. Il s'agit ici d'un projecteur avant qui rempli une fonction de feu anti-brouillard.

Le projecteur 10 est susceptible d'émettre un faisceau lumineux orienté vers l'avant selon un axe optique "A" globalement longitudinal. Il comporte un boîtier cylindrique 12 d'axe longitudinal "B" comportant une face d'extrémité axiale avant ouverte et un fond 14 d'extrémité axiale arrière fermé. A I figure 1 , l'axe "B" du boîtier 12 est confondu avec l'axe optique "A" du projecteur 10. La face d'extrémité axiale avant du boîtier 12 est fermée de façon étanche par une vitre avant 16 transparente de protection.

Le boîtier 12 renferme aussi une source lumineuse 18 et un réflecteur 20. La source lumineuse 18 est dans l'exemple représenté une lampe halogène qui comporte une ampoule 18 et un culot 22. Le culot 22 est fixé dans le fond 14 du boîtier 12. A cet effet, le fond 14 du boîtier 12 comporte un orifice central (non représenté) de fixation du culot 22. L'orifice de fixation est débouchant de manière qu'un tronçon arrière du culot 22 formant un connecteur 24 qui est agencé à l'extérieur et à l'arrière du boîtier 12 puisse être alimenté en électricité.

Le réflecteur 20 comporte une surface avant concave de forme paraboloïde qui définit l'axe optique "A". Le réflecteur 20 est monté pivotant à l'intérieur du boîtier 12 autour d'un axe transversal de pivotement "C".

A cet effet, le réflecteur 20 comporte deux tourillons latéraux opposés 26 qui sont agencés transversalement de part et d'autre du réflecteur 20 selon l'axe de pivotement "C". Ces tourillons 26 sont reçus dans des logements latéraux opposés du boîtier 12.

L'axe de pivotement "C" est sécant à l'axe longitudinal optique "A" du réflecteur 20 en un point d'intersection qui forme un foyer optique (non représenté) du réflecteur 20. Le filament de la lampe 18 est plus particulièrement positionné au foyer optique du réflecteur 20 de manière que les rayons lumineux émis par la lampe 18 qui atteignent la surface concave du réflecteur 20 soient réfléchis vers l'avant parallèlement à l'axe optique "A".

Le réflecteur 20 est ainsi mobile dans une plage de positions angulaires qui est limitée dans les deux sens par des butées angulaires (non représentées). L'axe optique "A" du projecteur 10 est donc susceptible d'occuper plusieurs positions angulaires de part et d'autre de l'axe longitudinal "B" du boîtier 12.

Dans l'exemple représenté aux figures, la plage de positions angulaires du réflecteur 20 est assez étroite, par exemple de l'ordre de 10°. A titre non limitatif, le pivotement du réflecteur 20 est ici destiné à régler précisément l'orientation de l'axe optique "A" du réflecteur 20 après le montage du projecteur 10 sur le véhicule automobile, notamment pour rattraper les jeux de montage.

Selon une variante non représentée de l'invention, le réflecteur 20 est fixé dans un berceau qui est lui-même monté pivotant autour de l'axe de pivotement "C" dans le boîtier 12.

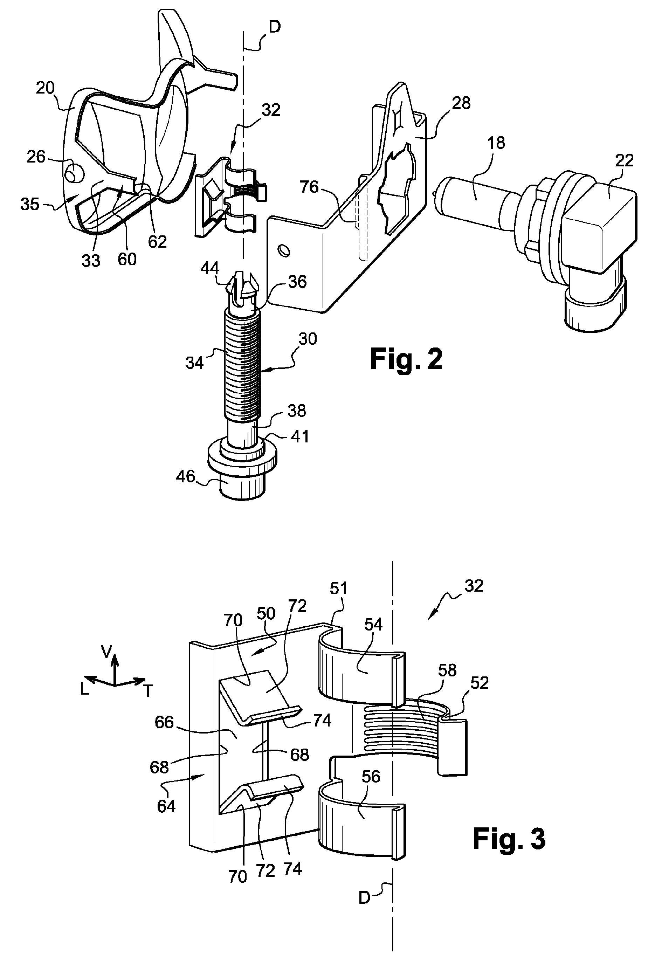

Comme représenté à la figure 2, le projecteur 10 comporte aussi une plaque de tôle 28 qui s'étend dans un plan vertical transversal. Cette plaque de tôle 28 est destinée à être fixée contre la face interne du fond 14 du boîtier 20 afin de former un écran thermique qui empêche la chaleur émise par la lampe 18 d'atteindre le fond 14 du boîtier 12.

La plaque de tôle 28 est ici en forme de "U" et elle comporte deux branches qui forment des flasques portant les logements latéraux destinés à recevoir les tourillons 26 du réflecteur 20. Ainsi, le réflecteur 20 est ici monté pivotant sur le boîtier 12 par l'intermédiaire de la plaque de tôle 28.

Selon les enseignements de l'invention, le projecteur 10 comporte des moyens pour régler la position angulaire du projecteur 10. Comme représenté à la figure 2, ces moyens comportent notamment une vis de réglage 30 et un écrou de réglage 32. Les moyens de réglage comportent aussi des moyens pour transformer le mouvement de translation rectiligne de l'écrou 32 en mouvement de pivotement du réflecteur 20.

Plus particulièrement, l'écrou 32 est commandé en déplacement rectiligne le long de l'axe de rotation de la vis de réglage 30 entre une position extrême haute et une position extrême basse. L'écrou 32 est lié mécaniquement à un maneton 33 du réflecteur 20 qui est excentré par rapport à l'axe de pivotement "C", par des moyens de transformation du mouvement rectiligne de l'écrou 32 en mouvement de pivotement du réflecteur 20 qui seront décrits plus en détail par la suite.

Les positions extrêmes haute et basse de l'écrou 32 correspondent aux positions angulaires du réflecteur 20 en butée angulaire.

De manière générale, le terme "maneton 33" se rapporte à un point géométrique du réflecteur qui est excentré par rapport à l'axe de pivotement "C" de manière qu'une force perpendiculaire à l'axe "C" et non sécante avec l'axe "C" appliquée au maneton 33 provoque le pivotement du réflecteur 20 selon le principe de la manivelle.

Comme représenté à la figure 2, le maneton 33 du réflecteur est ici formé par l'extrémité libre d'une plaque 35 longitudinale verticale de forme triangulaire dont la base est fixée à une extrémité transversale du réflecteur 20 à proximité de l'axe de pivotement "C". La plaque s'étend longitudinalement vers l'arrière jusqu'à son sommet arrière qui forme le maneton 33. La plaque 35 est avantageusement réalisée venue de matière avec le réflecteur 20.

La vis de réglage 30 est disposée en arrière du réflecteur 20. L'axe "D" de la vis de réglage 30 est orthogonal à l'axe de pivotement "C" du réflecteur 20, mais ces deux axes "C" et "D" ne sont pas sécants. L'axe "D" de la vis de réglage 30 est ici orienté verticalement.

Comme représenté à la figure 2, la vis de réglage 30 comporte un tronçon intermédiaire fileté 34 et deux tronçons d'extrémité axiale lisses supérieur 36 et inférieur 38.

Comme illustré à la figure 1 , la vis de réglage 30 est montée à rotation dans le boîtier 12 autour de son axe vertical "D".

A cet effet, le boîtier 12 comporte deux paliers supérieur 40 et inférieur 42 alignés selon l'axe "D". Le palier supérieur 40, respectivement inférieur 42, reçoit à rotation le tronçon lisse d'extrémité supérieur 36, respectivement d'extrémité inférieur 38, de la vis de réglage 30.

Le palier inférieur 42 forme un orifice qui traverse une paroi inférieure du boîtier 12 tandis que le palier supérieur 40 est non débouchant.

Pour bloquer le déplacement vertical vers le haut de la vis de réglage 30 par rapport au boîtier 12, le tronçon d'extrémité inférieur 38 comporte une face d'épaulement axial 41 qui est dirigé vers le haut de manière à être en contact avec une face externe en vis-à-vis 43 de la paroi inférieure du boîtier 12 qui s'étend autour du palier inférieur 42.

Pour bloquer le déplacement vertical vers le bas de la vis de réglage 30 par rapport au boîtier 12, le tronçon d'extrémité supérieur 36 comporte des crochets élastiques flexibles 44 qui sont susceptibles d'être emboîtées élastiquement dans une cavité de forme complémentaire du palier supérieur 40 du boîtier 12.

Les déplacements verticaux de la vis de réglage 30 par rapport au boîtier 12 sont ainsi bloqués dans les deux sens.

De plus, l'extrémité inférieure 46 de la vis est conformée en une molette externe d'actionnement afin que la vis de réglage 30 puisse être tournée dans les deux sens autour de son axe "D", par exemple manuellement ou par l'intermédiaire d'un moteur électrique. La molette d'actionnement 46 est ainsi accessible à l'extérieur du boîtier 12.

Un joint d'étanchéité 48 torique est ici intercalé entre la face d'épaulement 41 de la vis de réglage 30 et la face en vis-à-vis 43.

Le tronçon fileté 34 de la vis de réglage 30 est destiné à être vissé dans l'écrou de réglage 32 de manière que la rotation de la vis de réglage 30 commande le déplacement en translation rectiligne verticale de l'écrou 32 le long de l'axe vertical "D" de la vis de réglage 30.

L'écrou de réglage 32 est représenté plus en détail à la figure 3. Il comporte une plaque de support 50 qui s'étend dans un plan transversal vertical. Un bord d'extrémité transversal de la plaque de support 50 est recourbé vers l'arrière de manière à former une première aile longitudinale 51.

La première aile 51 porte ici trois pattes 52, 54, 56 plates longitudinales verticales qui s'étendent longitudinalement vers l'arrière. Les pattes 52, 54, 56 sont superposées les unes au-dessus des autres. La patte centrale 52 est courbée dans un premier sens tandis que les deux pattes d'extrémité 54, 56 sont courbées dans un deuxième sens de manière que la face concave de la patte centrale 52 soit tournée vers la face concave des pattes d'extrémité 54, 56.

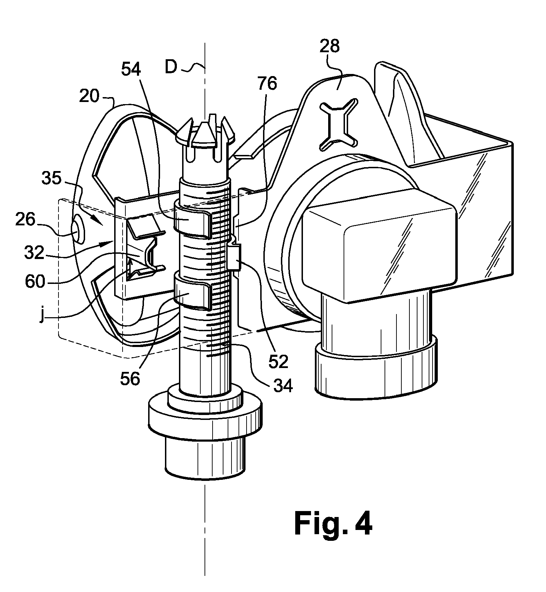

Les pattes 52, 54, 56 sont plus particulièrement courbées en demi-cylindres de manière que leurs faces concaves en vis-à-vis délimitent un cylindre d'axe vertical "D" qui est destiné à former un orifice de passage adapté au diamètre de la vis de réglage 30. Comme représenté à la figure 4, lorsque la vis 30 est insérée dans l'orifice de passage ainsi défini, le tronçon fileté 34 de la vis de réglage 30 est embrassé entre la patte centrale 52 et les pattes opposées d'extrémité 54, 56 de manière à être en contact avec la face concave de chaque patte 52, 54, 56. L'écrou 32 est ainsi maintenu radialement par rapport à la vis de réglage 30.

L'extrémité arrière libre des pattes 52, 54, 56 est en outre recourbée vers l'extérieur de manière que les pattes 52, 54, 56 forment un "S". Ainsi, leur bord à angle vif d'extrémité arrière n'est pas en contact avec le tronçon fileté 34 de la vis de réglage 30 pour ne pas gêner la rotation de la vis de réglage 30 par frottement.

La face concave de la patte centrale 52 comporte des filets 58 de forme complémentaire des filets hélicoïdaux du tronçon fileté 34 de la vis de réglage 30, tandis que les faces concaves des pattes d'extrémité 54, 56 sont lisses. La vis de réglage 30 est ainsi susceptible d'exercer un effort vertical sur la patte centrale 52 tandis que les pattes d'extrémité 54, 56 maintiennent la vis de réglage 30 en contact avec les filets 58 de la patte centrale 52.

Les moyens de transformation du mouvement rectiligne de l'écrou 32 en mouvement de pivotement du réflecteur 20 comportent ici un bras 60 d'axe perpendiculaire à l'axe de pivotement "C" du réflecteur 20. Le bras 60 s'étend ici vers l'arrière selon l'axe optique "A" du réflecteur 20 depuis le maneton 33 du réflecteur 20 jusqu'à un tronçon d'extrémité libre 62. Le bras 60 est plus précisément lié mécaniquement au maneton 33 par une liaison du type encastrement.

Le bras 60 est ici réalisé venu de matière avec le réflecteur 20.

Dans l'exemple représenté aux figures, l'écrou de réglage 32 est monté coulissant axialement sur le tronçon d'extrémité libre 62 du bras 60 et il est articulé autour d'un axe transversal d'articulation "E" par rapport au bras 60.

A cet effet, l'écrou 32 est fixé à un guide de coulissement 64 qui est monté coulissant axialement sur le tronçon d'extrémité libre 62 du bras 60. Dans l'exemple représenté à la figure 3, l'écrou 32 est avantageusement réalisé en une seule pièce avec le guide de coulissement 64.

Le guide de coulissement 64 est formé dans la plaque de support 50 de l'écrou 32. Il comporte notamment un orifice 66 de guidage du bras 60. L'orifice de guidage 66 est délimité transversalement par des bords verticaux 68 et verticalement par des bords horizontaux 70.

Le guide de coulissement 64 est aussi monté articulé autour d'un axe transversal "E" par rapport au bras 60 pour permettre le pivotement de l'écrou 32. A cet effet, le tronçon d'extrémité libre 62 du bras 60 est monté dans l'orifice de guidage 66 avec un jeu vertical "j", comme illustré à la figure 4. Le guide de coulissement 64 comporte deux lamelles élastiques souples 72 qui s'étendent longitudinalement vers l'arrière depuis les bords horizontaux 70 de l'orifice de guidage 66. Les lamelles 72 sont plus particulièrement agencées de manière que leurs extrémités arrière libres 74 pincent verticalement le tronçon de bras 60 engagé dans l'orifice de guidage 66.

Ce pincement des lamelles 72 permet de centrer le bras 60 dans l'orifice de guidage 66 du guide de coulissement 64. Ainsi, le guide de coulissement peut coulisser le long du bras 60 tout en permettant un pivotement du bras 60. En effet, lorsque le bras pivote, la hauteur de sa section verticale varie. Les lamelles 72 fléchissent alors pour adapter la section de passage de l'orifice de guidage 66 à la variation de hauteur de la section verticale du bras 60.

De plus, les extrémités arrière libres 74 des lamelles 72 sont recourbées de manière qu'elles soient en contact avec le bras par une face arrondie. La surface de contact entre le bras 60 et chaque lamelle 72 forme ainsi une ligne transversale.

La surface de contact réduite à une ligne transversale permet de réduire le couple exercé par le bras 60 sur le guide de coulissement 64 afin de permettre au guide de coulissement 64 et à l'écrou 32 de conserver une position angulaire fixe par rapport au boîtier 12.

De plus, cette surface de contact réduite permet aussi de faciliter le coulissement du guide de coulissement 64 sur le bras 60 en réduisant les frottements.

En outre, l'extrémité recourbée 74 des lamelles 72 permet au guide de coulissement 64 de se déplacer en coulissement axial dans les deux sens sur le bras 60 sans qu'il ne se produise d'effet de blocage par pincement du bras 60 notamment lorsque le guide de coulissement 64 coulisse vers l'arrière.

Par ailleurs, les déplacements transversaux du guide de coulissement 64 sur le bras 60 sont limités par les bords verticaux 68 de l'orifice de guidage 66. Les bords verticaux 68 de l'orifice de guidage 66 permettent aussi d'empêcher l'écrou 32 de pivoter autour de l'axe vertical "D" de la vis de réglage 30.

Selon une autre aspect de l'invention, le projecteur 10 comporte aussi des moyens pour débrayer la liaison entre l'écrou 32 et la vis de réglage 30 de manière que la rotation de la vis de réglage 30 ne provoque plus la translation axiale de l'écrou 32. Ces moyens sont mis en oeuvre lorsque l'écrou 32 atteint l'une de ses positions extrêmes haute ou basse, c'est-à-dire lorsque le réflecteur 20 est en butée angulaire.

A cet effet, la patte centrale 52 qui porte les filets 58 est flexible élastiquement dans un plan horizontal entre une position embrayée dans laquelle les filets 58 sont engagés dans les filets du tronçon fileté de la vis de réglage 30, et une position débrayée dans laquelle la patte est écartée radialement par rapport à la vis de manière que les filets 58 de la patte centrale 52 ne soient plus en contact avec le tronçon fileté 34 de la vis de réglage 30. La patte centrale 52 est rappelée élastiquement vers sa position embrayée.

Lorsque le pivotement du réflecteur 20 est bloqué dans un sens par une des butées angulaires, l'écrou 32 est dans une de ses positions extrêmes. Les déplacements de l'écrou 32 sont bloqués dans une première direction, en revanche, les déplacements de l'écrou 32 sont autorisés dans une deuxième direction.

Lorsque la vis de réglage 30 est tournée de manière à déplacer l'écrou 32 au-delà de sa position extrême, les filets de la vis 30 exercent une pression croissante sur les filets 58 de l'écrou 32. Les filets de la vis 30 et de l'écrou 32 ayant un profil en dent de scie, il résulte de la pression exercée par la vis une force appliquée à la patte centrale 52 comportant une première composante verticale et une deuxième composante transversale.

La composante verticale de la force est insuffisante pour bouger l'écrou 32. En forçant la rotation de la vis 30, on augmente l'intensité de la force et notamment de sa composante transversale. La patte centrale 52 portant les filets 58 de l'écrou 32 est alors poussée transversalement vers sa position débrayée, ce qui permet à la vis de réglage 30 de tourner à vide. Puis la patte centrale 52 est rappelée dans sa position embrayée après avoir "sauté" des filets de la vis de réglage 30.

En revanche, lorsque la vis de réglage 30 est tournée dans l'autre sens, de manière à déplacer l'écrou 32 en direction de sa deuxième position extrême, la patte centrale 52 reste dans sa position embrayée. La composante verticale de la force résultante provoque le coulissement de l'écrou 32, la composante transversale de la force résultante n'augmentant pas suffisamment pour permettre d'écarter la patte 52 vers sa position débrayée.

Par ailleurs, afin d'assurer que la patte 52 demeure dans sa position embrayée tant que l'écrou 32 occupe une position intermédiaire entre ses deux positions angulaires extrêmes, le projecteur 10 comporte des moyens pour verrouiller la patte 52 en position embrayée.

Pour ce faire, comme représenté aux figures 2 et 4, la plaque 28 du projecteur 10 comporte ici un bord vertical 76 de verrouillage parallèle à l'axe de la vis "D" qui est disposé le long de la trajectoire de l'écrou 32 entre ses positions extrêmes. Le bord de verrouillage 76 est en contact avec l'extrémité libre de la patte centrale 52 de manière à empêcher celle-ci d'être écartée vers sa position débrayée. Le bord de verrouillage 76 est délimité verticalement vers le haut et vers le bas de manière à ne plus empêcher la patte 52 d'être écartée vers sa position débrayée lorsque l'écrou 32 occupe l'une de ses position extrêmes haute ou basse.

Avantageusement, l'écrou 32 et le guide de coulissement 64 sont réalisés en une seule pièce. Ils sont ici réalisés en une tôle métallique souple qui confère à la patte 52 la flexibilité et l'élasticité requise.

Selon une variante non représentée l'écrou 32 et le guide de coulissement 64 sont réalisés en matériau plastique rigide déformable élastiquement.

Lors du montage du projecteur 10, la vis de réglage 30 est insérée selon un mouvement vertical dirigé de bas en haut dans le palier inférieur 42 jusqu'à ce que les crochets 44 soient emboîtés dans le palier supérieur 40.

Puis, par empilement selon l'axe L, l'écrou de réglage 32 est clippé sur le tronçon fileté 34 de la vis de réglage 30. Ensuite, la plaque de tôle 28 est montée dans le boîtier 12. Enfin, le réflecteur 20 est monté pivotant entre les branches de la plaque de tôle 28 en introduisant le tronçon d'extrémité libre 62 du bras 60 dans l'orifice de guidage 66 de l'écrou de guidage 32, de manière que l'extrémité libre de la patte centrale 52 soit en contact avec le bord de verrouillage 76.

On décrit à présent le fonctionnement du projecteur 10 en référence aux figures 1 et 5.

Pour régler la position angulaire du réflecteur 20, on tourne la vis de réglage 30 dans un sens ou dans l'autre. La vis 30 entraîne alors l'écrou 32 en déplacement vertical en translation le long de son axe "D". L'écrou 32 agit sur le bras 60 en provoquant un effort vertical sur le maneton 33 du réflecteur 20 ce qui entraîne le pivotement du réflecteur 20 autour de son axe "C". L'écrou 32 étant monté articulé et coulissant sur le bras 60, il ne pivote donc pas par rapport à la vis de réglage 30.

Selon une variante non représentée de l'invention, le bras 60 comporte un tronçon d'extrémité libre en forme de fourche comportant deux ailes longitudinales. Les faces en vis-à-vis des ailes de la fourche comportent des rainures longitudinales. L'écrou 32 est agencé entre les deux ailes de la fourche et il comporte deux tourillons transversaux d'axe "D" qui sont reçus dans les rainures. L'écrou 32 est ainsi articulé autour de l'axe "E" tandis qu'il est monté coulissant le long des rainures.

Selon une autre variante non représentée de l'invention, le guide de coulissement 64 est monté coulissant mais pas pivotant par rapport au bras 60, et l'écrou 32 est monté pivotant sur le guide de coulissement 64.

Selon encore une variante non représentée de l'invention, le mouvement de coulissement de l'écrou 32 est obtenu par un bras 60 télescopique.

Selon encore une autre variante non représentée de l'invention, le projecteur 10 comporte une bielle. La première extrémité de la bielle est montée pivotante sur le maneton 33 du réflecteur tandis que l'écrou 32 est monté pivotant sur la deuxième extrémité de la bielle. Le mouvement de translation rectiligne de l'écrou 32 est ainsi transformé en mouvement de pivotement du réflecteur 20 par un système du type "bielle-manivelle".

L'invention s'applique aussi à un projecteur dont le boîtier 12 renferme plusieurs sources lumineuses associées chacune à un réflecteur de manière à remplir plusieurs fonctions d'éclairage dans un volume réduit. Les moyens de réglage de la position angulaire du réflecteur selon l'invention sont tout à fait adaptés à ce type de situation car ils sont très peu encombrants.

L'invention présente l'avantage de permettre une tolérance de position entre l'axe "D" de la vis de réglage 30 et l'axe de pivotement "C" du réflecteur 20. En effet, le jeu de montage est ici rattrapé par le coulissement de l'écrou 32 sur le bras 60. Ainsi, la vis de réglage 30 est toujours parfaitement engagée dans l'écrou 32 quel que soit l'écart de sa position réelle par rapport à sa position nominale dans le boîtier 12 par rapport à l'axe de pivotement "C" du réflecteur 20.

De plus, grâce aux moyens de débrayage, il n'est pas possible de forcer sur la vis de réglage 30 de manière à détériorer les butées angulaires du réflecteur 20 ou les filets 58 de l'écrou 32.

L'écrou 32 étant ici réalisé en une seule pièce avec le guide de coulissement 64 par découpage et par pliage d'une tôle, le dispositif de réglage selon l'invention est simple et peu onéreux à fabriquer.

## Revendications

1. Projecteur (10) de véhicule automobile qui est susceptible d'émettre un faisceau selon un axe optique (A) globalement longitudinal et qui comporte :
- un réflecteur (20) qui est monté pivotant dans un boîtier (12) autour d'un axe de pivotement transversal (C) dans une plage de positions angulaires de réglage limitée par des butées angulaires extrêmes,
- des moyens de réglage (30, 32) de la position angulaire du réflecteur (20) autour de son axe de pivotement (C) qui comportent une vis de réglage (30), ladite vis de réglage étant montée à rotation dans le boîtier (12) autour de son axe (D) et l'axe (D) de la vis ayant un angle déterminé par rapport à l'axe de pivotement (C) du réflecteur (20) de manière à commander le pivotement du réflecteur (20),
lesdits moyens de réglage comportant un écrou (32) qui est commandé en déplacement rectiligne le long de l'axe de rotation (D) de la vis (30) entre deux positions extrêmes, l'écrou (32) étant lié mécaniquement à un maneton (33) excentré du réflecteur (20) par des moyens (60) de transformation du mouvement rectiligne de l'écrou (32) en mouvement de pivotement du réflecteur (20),
**caractérisé en ce que** l'écrou (32) est maintenu radialement par rapport à la vis (30) par au moins une face non filetée (54, 56) qui est agencée en opposition par rapport à une patte déformable filetée (52) qui porte les filets (58) de l'écrou (32), ledit écrou (32) comportant des moyens (52) pour débrayer de manière réversible la liaison entre la vis de réglage (30) et les filets (58) de l'écrou (32) lorsque le réflecteur (20) entre en contact avec une butée angulaire extrême, ladite patte (52) étant déformable élastiquement entre une position embrayée des filets (58) de l'écrou (32) avec la vis de réglage (30) vers laquelle la patte déformable (52) est rappelée élastiquement, et une position débrayée dans laquelle la patte filetée (52) de l'écrou (32) est écartée de la vis de réglage (30) de manière que, lorsque le réflecteur (20) bute contre l'une des butées angulaires extrêmes, la rotation de la vis de réglage (30) provoque l'écartement de la patte flexible (52) pour que la vis (30) saute des filets (58) et **en ce que** ledit projecteur comporte des moyens de verrouillage (76) de la patte filetée (52) de l'écrou (32) en position embrayée lorsque l'écrou (32) occupe une position intermédiaire.

2. Projecteur (10) selon la revendication précédente, **caractérisé en ce que** l'écrou (32) est monté articulé par rapport au réflecteur (20) autour d'un axe transversal (E) d'articulation, l'axe d'articulation (E) étant mobile par rapport au maneton (33) du réflecteur (20) de manière à transformer le mouvement rectiligne de l'écrou (32) en mouvement de pivotement du réflecteur (20).

3. Projecteur (10) selon la revendication précédente, **caractérisé en ce qu'**il comporte un bras (60) dont l'axe a un angle déterminé par rapport à l'axe de pivotement (C) du réflecteur (20), ledit bras (60) ayant une première extrémité fixée au maneton (33), l'écrou (32) étant monté coulissant axialement sur un tronçon d'extrémité libre (62) du bras (60) par l'intermédiaire d'un guide de coulissement (64).

4. Projecteur (10) selon la revendication précédente, **caractérisé en ce que** l'écrou (32) est monté articulé sur le guide de coulissement (64) autour de l'axe transversal d'articulation (E).

5. Projecteur (10) selon la revendication 4, **caractérisé en ce que** le guide de coulissement (64) est aussi monté articulé par rapport au bras (60) autour de l'axe d'articulation (E)

6. Projecteur (10) selon la revendication 3, 4 ou 5, **caractérisé en ce que** le guide de coulissement (64) comporte un orifice (66) de guidage dans lequel le bras (60) est engagé avec un jeu.

7. Projecteur (10) selon la revendication précédente, **caractérisé en ce que** ledit orifice de guidage (66) est un trou traversant.

8. Projecteur (10) selon la revendication précédente, **caractérisé en ce que** ledit orifice de guidage (66) comprend des bords verticaux (68) limitant les déplacements transversaux du guide de coulissement (64) sur le bras (60).

9. Projecteur (10) selon l'une quelconque des revendications 6 à 8, **caractérisé en ce que** le bras est centré dans l'orifice (66) par des moyens de centrage élastiquement déformables.

10. Projecteur selon la revendication 5, **caractérisé en ce que** le bras (60) comporte une fourche dans laquelle l'écrou (32) est monté pivotant par l'intermédiaire de tourillons d'axe transversal (E) qui sont montés coulissants selon l'axe du bras (60) dans des rainures axiales du bras (60).

11. Projecteur (10) selon la revendication 2, **caractérisé en ce qu'**il comporte une bielle dont une première extrémité est montée sur le maneton du réflecteur par une liaison du type pivot et dont une deuxième extrémité est monté articulée sur l'écrou.

12. Projecteur (10) selon l'une quelconque des revendications précédentes, **caractérisé en ce que** ladite vis de réglage (30) est monté à rotation dans le boîtier (12) autour de son axe (D) perpendiculairement à l'axe de pivotement (C) du réflecteur (20).

13. Projecteur (10) selon la revendication 12 et la revendication 3 prises en combinaison, **caractérisé en ce que** l'axe du bras (60) est perpendiculaire à l'axe de pivotement (C) du réflecteur (20).

## Patentansprüche

1. Kraftfahrzeugscheinwerfer (10), der ein Lichtbündel entlang einer allgemein längs verlaufenden optischen Achse (A) zu emittieren vermag und der umfasst:
- einen Reflektor (20), der in einem Gehäuse (12) in einem durch Winkelendanschläge begrenzten Einstellbereich von Winkelpositionen um eine quer verlaufende Schwenkachse (C) schwenkbar gelagert ist,
- Mittel (30, 32) zum Verstellen der Winkelposition des Reflektors (20) um seine Schwenkachse (C), die eine Verstellschraube (30) umfassen, wobei die Verstellschraube in dem Gehäuse (12) drehbeweglich um ihre Achse (D) montiert ist und die Achse (D) der Schraube einen bestimmten Winkel bezüglich der Schwenkachse (C) des Reflektors (20) aufweist, um das Schwenken des Reflektors (20) zu bewirken,
wobei die Verstellmittel eine Mutter (32) aufweisen, die sich entlang der Drehachse (D) der Schraube (30) zwischen zwei Endstellungen geradlinig verlagernd betätigt wird, wobei die Mutter (32) durch Mittel (60) zur Umwandlung der geradlinigen Bewegung der Mutter (32) in eine Schwenkbewegung des Reflektors (20) mechanisch mit einem exzentrischen Gelenkbolzen (33) des Reflektors (20) verbunden ist, **dadurch gekennzeichnet, dass** die Mutter (32) bezüglich der Schraube (30) radial durch wenigstens eine gewindelose Seite (54, 56) gehalten ist, die in Bezug auf eine verformbare Gewindelasche (52), die die Gewinde (58) der Mutter (32) trägt, entgegengesetzt angeordnet ist, wobei die Mutter (32) Mittel (52) aufweist, um die Verbindung zwischen der Verstellschraube (30) und den Gewinden (58) der Mutter (32) reversibel auszukuppeln, wenn der Reflektor (20) mit einem Winkelendanschlag in Kontakt gelangt, wobei die Lasche (52) elastisch verformbar ist zwischen einer mit der Verstellschraube (30) eingekuppelten Stellung der Gewinde (58) der Mutter (32), in die die verformbare Lasche (52) elastisch gedrängt ist, und einer ausgekuppelten Stellung, in der die Gewindelasche (52) der Mutter (32) von der Verstellschraube (30) ausgerückt ist, so dass die Drehung der Verstellschraube (30) das Abrücken der flexiblen Lasche (52) bewirkt, wenn der Reflektor (20) gegen einen der Winkelendanschläge in Anschlag gerät, damit die Schraube (30) die Gewinde (58) überspringt, und dass der Scheinwerfer Mittel (76) zum Verriegeln der Gewindelasche (52) der Mutter (32) in eingekuppelter Stellung aufweist, wenn die Mutter (32) eine Zwischenstellung einnimmt.

2. Scheinwerfer (10) nach dem vorhergehenden Anspruch,
**dadurch gekennzeichnet, dass** die Mutter (32) bezüglich des Reflektors (20) gelenkig um eine quer verlaufende Drehachse (E) gelagert ist, wobei die Drehachse (E) bezüglich des Gelenkbolzens (33) des Reflektors (20) beweglich ist, um die geradlinige Bewegung der Mutter (32) in eine Schwenkbewegung des Reflektors (20) umzuwandeln.

3. Scheinwerfer (10) nach dem vorhergehenden Anspruch,
**dadurch gekennzeichnet, dass** er einen Arm (60) aufweist, dessen Achse einen bezüglich der Schwenkachse (C) des Reflektors (20) bestimmten Winkel hat, wobei der Arm (60) ein erstes an dem Gelenkbolzen (33) befestigtes Ende hat und die Mutter (32) auf einem freien Endstück (62) des Arms (60) mittels einer Gleitführung (64) axial gleitend gelagert ist.

4. Scheinwerfer (10) nach dem vorhergehenden Anspruch,
**dadurch gekennzeichnet, dass** die Mutter (32) auf der Gleitführung (64) um die quer verlaufende Drehachse (E) gelenkig gelagert ist.

5. Scheinwerfer (10) nach Anspruch 4,
**dadurch gekennzeichnet, dass** die Gleitführung (64) auch bezüglich des Arms (60) um die Drehachse (E) gelenkig gelagert ist.

6. Scheinwerfer (10) nach Anspruch 3, 4 oder 5,
**dadurch gekennzeichnet, dass** die Gleitführung (64) eine Führungsöffnung (66) aufweist, in der der Arm (60) mit Spiel eingesteckt ist.

7. Scheinwerfer (10) nach dem vorhergehenden Anspruch,
**dadurch gekennzeichnet, dass** die Führungsöffnung (66) eine durchgehende Bohrung ist.

8. Scheinwerfer (10) nach dem vorhergehenden Anspruch,
**dadurch gekennzeichnet, dass** die Führungsöffnung (66) senkrechte Ränder (68) aufweist, die die Querverschiebungen der Gleitführung (64) auf dem Arm (60) begrenzen.

9. Scheinwerfer (10) nach einem der Ansprüche 6 bis 8,
**dadurch gekennzeichnet, dass** der Arm in der Öffnung (66) durch elastisch verformbare Zentriermittel zentriert ist.

10. Scheinwerfer (10) nach Anspruch 5,
**dadurch gekennzeichnet, dass** der Arm (60) eine Gabel aufweist, in der die Mutter (32) mit Hilfe von Lagerzapfen mit einer Querachse (E) schwenkbar gelagert ist, die entlang der Achse des Arms (60) in axialen Nuten des Arms (60) gleitend gelagert sind.

11. Scheinwerfer (10) nach Anspruch 2,
**dadurch gekennzeichnet, dass** er eine Schubstange aufweist, deren erstes Ende auf dem Gelenkbolzen des Reflektors durch eine Gelenkverbindung angebracht ist und deren zweites Ende gelenkig auf der Mutter montiert ist.

12. Scheinwerfer (10) nach einem der vorhergehenden Ansprüche,
**dadurch gekennzeichnet, dass** die Verstellschraube (30) in dem Gehäuse (12) um ihre Achse (D) senkrecht zur Schwenkachse (C) des Reflektors (20) drehbeweglich gelagert ist.

13. Scheinwerfer (10) nach Anspruch 12 und Anspruch 3 in Verbindung miteinander,
**dadurch gekennzeichnet, dass** die Achse des Arms (60) senkrecht zur Schwenkachse (C) des Reflektors (20) verläuft.

## Claims

1. Motor vehicle headlight (10) which can emit a beam according to a globally longitudinal optical axis (A), and which comprises:
- a reflector (20) which is fitted such as to pivot in a housing (12) around a transverse pivoting shaft (C) in a range of angular adjustment positions which is limited by end angular stops;
- means (30, 32) for adjustment of the angular position of the reflector (20) around its pivoting shaft (C), which comprise an adjustment screw (30), the said adjustment screw being fitted such as to rotate in the housing (12) around its axis (D), and the axis (D) of the screw having an angle which is determined relative to the pivoting shaft (C) of the reflector (20), such as to control the pivoting of the reflector (20);
the said means for adjustment comprising a nut (32) which is controlled in rectilinear displacement along the axis of rotation (D) of the screw (30) between two end positions, the nut (32) being connected mechanically to an eccentric crank pin (33) of the reflector (20) by means (60) for transformation of the rectilinear movement of the nut (32) into pivoting movement of the reflector (20),
**characterised in that** the nut (32) is retained radially relative to the screw (30) by at least one non-threaded surface (54, 56) which is arranged in opposition relative to a threaded deformable lug (52) which bears the threads (58) of the nut (32), the said nut (32) comprising means (52) for releasing in a reversible manner the connection between the adjustment screw (30) and the threads (58) of the nut (32), when the reflector (20) comes into contact with an end angular stop, the said lug (52) being resiliently deformable between a position in which the threads (58) of the nut (32) are engaged with the adjustment screw (30), towards which the deformable lug (52) is returned resiliently, and a released position in which the threaded lug (52) of the nut (32) is spaced from the adjustment screw (30) such that, when the reflector (20) abuts one of the end angular stops, the rotation of the adjustment screw (30) gives rise to the spacing of the flexible lug (52), such that the screw (30) skips over the threads (58), and **in that** the said headlight comprises means (76) for locking the threaded lug (52) of the nut (32) in the engaged position, when the nut (32) occupies an intermediate position.

2. Headlight (10) according to the preceding claim, **characterised in that** the nut (32) is fitted such as to be articulated relative to the reflector (20), around a transverse articulation shaft (E), the articulation shaft (E) being mobile relative to the crank pin (33) of the reflector (20), such as to transform the rectilinear movement of the nut (32) into pivoting movement of the reflector (20).

3. Headlight (10) according to the preceding claim, **characterised in that** it comprises an arm (60), the axis of which has an angle which is determined relative to the pivoting shaft (C) of the reflector (20), the said arm (60) having a first end which is secured to the crank pin (33), the nut (32) being fitted such as to slide axially on a free end section (62) of the arm (60) by means of a sliding guide (64).

4. Headlight (10) according to the preceding claim, **characterised in that** the nut (32) is fitted such as to be articulated on the sliding guide (64) around the transverse articulation shaft (E).

5. Headlight (10) according to claim 4, **characterised in that** the sliding guide (64) is also fitted such as to be articulated relative to the arm (60), around the articulation shaft (E).

6. Headlight (10) according to claim 3, 4 or 5, **characterised in that** the sliding guide (64) comprises a guide orifice (66), in which the arm (60) is engaged with play.

7. Headlight (10) according to the preceding claim, **characterised in that** the said guide orifice (66) is a through hole.

8. Headlight (10) according to the preceding claim, **characterised in that** the said guide orifice (66) comprises vertical edges (68) which limit the transverse displacements of the sliding guide (64) on the arm (60).

9. Headlight (10) according to any one of claims 6 to 8, **characterised in that** the arm is centred in the orifices (66) by resiliently deformable centring means.

10. Headlight (10) according to claim 5, **characterised in that** the arm (60) comprises a fork in which the nut (32) is fitted such as to pivot by means of transverse shaft (E) pins, which are fitted such as to slide according to the axis of the arm (60) in axial grooves in the arm (60).

11. Headlight (10) according to claim 2, **characterised in that** it comprises a connecting rod, a first end of which is fitted on the crank pin of the reflector by means of a connection of the pivot type, and a second end of which is fitted such as to be articulated on the nut.

12. Headlight (10) according to any one of the preceding claims, **characterised in that** the said adjustment screw (30) is fitted such as to rotate in the housing (12), around its axis (D), perpendicularly to the pivoting shaft (C) of the reflector (20).

13. Headlight (10) according to claim 12 and claim 3 taken in combination, **characterised in that** the axis of the arm (60) is perpendicular to the pivoting shaft (C) of the reflector (20).
